# EUROPÄISCHE PATENTSCHRIFT

(11) **EP 1 342 600 B1**
(45) Veröffentlichungstag und Bekanntmachung des Hinweises auf die Patenterteilung: **08.04.2009**
(21) Anmeldenummer: 03004344.2
(22) Anmeldetag: 28.02.2003
(51) Int. Cl.: B60J 7/20, B60J 7/22

(54) **Windabweiser für ein Fahrzeugdach**
Wind deflector for vehicle roof
Déflecteur de vent pour toit de véhicule

(30) Priorität: 07.03.2002 DE 10210142
(43) Veröffentlichungstag der Anmeldung: 10.09.2003
(73) Patentinhaber: ArvinMeritor GmbH, 63128 Dietzenbach (DE)
(72) Erfinder: Böhm, Horst, 60599 Frankfurt (DE); Grimm, Rainer, 60599 Frankfurt (DE); Hörmann, Karl, 94264 Langdorf (DE); Bachmann, Hubert, 67125 Dannstadt (DE); Boss, Christoph, 60599 Frankfurt (DE); Mondello, Carmelo, 61476 Kronberg i.Ts. (DE)
(74) Vertreter: Prinz & Partner

(56) Entgegenhaltungen:
- DE-A- 4 402 314
- DE-A- 19 518 696
- DE-C- 4 039 485
- DE-C- 19 603 670
- US-A1- 2001 017 479

## Beschreibung

Die Erfindung betrifft einen Windabweiser für ein Fahrzeugdach, wie er in Verbindung mit Schiebedachsystemen verwendet wird, mit einem Basiselement, das dafür vorgesehen ist, an dem Fahrzeugdach angebracht zu werden, einem Aussteller, der mit dem Basiselement schwenkbar verbunden ist, einem luftdurchlässigen und flexiblen Abweiserelement, das an dem Basiselement und an dem Aussteller angebracht ist.

Der Windabweiser hat die Funktion, die Strömungsverhältnisse dann zu verbessern, wenn der Deckel des Schiebedachsystems sich in einer geöffneten Stellung befindet. Der Windabweiser ist üblicherweise an dem in Fahrtrichtung gesehen vorderen Rand der vom Deckel freigegebenen Dachöffnung angeordnet und wird aus einer eingefahrenen Stellung, in der er sich unterhalb der Außenfläche des Fahrzeugdaches befindet, in eine ausgestellte Stellung überführt, wenn der Deckel geöffnet wird.

Ein allgemein bekanntes Problem bei einem Schiebedachsystem besteht darin, daß es bei geöffnetem Deckel zu periodischen Druckschwankungen im Inneren des Fahrzeugs kommen kann, wenn sich das Fahrzeug mit niedrigen bis mittleren Geschwindigkeiten bewegt. Diese periodischen Druckschwankungen machen sich als sogenanntes Wummern hauptsächlich akustisch bemerkbar. Zur Vermeidung dieser Druckschwankungen sind die verschiedensten Ausgestaltungen von Windabweisern getestet worden. Ein Beispiel findet sich in der DE 40 39 485 C1. In dieser Druckschrift ist ein starrer Windabweiser gezeigt, der über einen großen Bereich seiner Fläche mit einem luftdurchlässigen Netz versehen ist. Der durch das Netz hindurchströmende Luftstrom bildet im Bereich der Dachöffnung eine sehr fein turbulente Luftschicht aus, die dem Entstehen der lästigen Druckschwankungen im Fahrzeuginnenraum entgegenwirkt.

Der Nachteil dieses bekannten Windabweisers besteht darin, daß es sich um eine aufwendige Konstruktion mit hohem Platzbedarf handelt. Nachteilig ist ferner der hohe Montageaufwand.

Ein Windabweiser der eingangs genannten Art ist aus der DE 196 03 670 C1 bekannt.

Die Aufgabe der Erfindung besteht darin, einen Windabweiser zu schaffen, der sich durch einen einfachen, platzsparenden Aufbau auszeichnet.

Zu diesem Zweck ist erfindungsgemäß bei einem Windabweiser der eingangs genannten Art vorgesehen, daß der Windabweiser weiter mindestens eine Ausstellerfeder umfasst, die den Aussteller in eine ausgestellte Stellung beaufschlagt, in der das Abweiserelement zwischen dem Basiselement und dem Aussteller gespannt ist, wobei die Ausstellerfeder eine Schenkelfeder aus Draht ist, die als Gelenk zwischen dem Aussteller und dem Basiselement dient, oder als Ausstellerfeder eine Blattfeder verwendet wird, die im Aussteller und im Basiselement angebracht ist und als Gelenk wirkt. Da das Abweiserelement flexibel ist, kann es ohne Aufwand platzsparend zusammengelegt werden. Zu diesem Zweck muß lediglich der Aussteller zum Basiselement hin gedrückt werden. Trotz der Flexibilität des Abweiserelements wird ohne Aufwand die notwendige Formsteifigkeit für den Betrieb erreicht, indem das Abweiserelement zwischen dem Basiselement und dem Aussteller gespannt wird. Auf diese Weise ergibt sich ein besonders einfacher Aufbau, da kein zusätzliches Gelenk vorgesehen werden muß. Vorzugsweise sind dabei das Basiselement und der Aussteller jeweils U-förmig ausgebildet, und jeweils eine Schenkelfeder verbindet einen Schenkel des Ausstellers mit einem Schenkel des Basiselements.

Die Schenkel der Schenkelfedern können in das Basiselement und den Aussteller eingesteckt werden und dort mechanisch verrasten. Es ist auch möglich, die Schenkelfeder in die Gußform für das Basiselement und den Aussteller einzulegen und dort unmittelbar einzuspritzen.

Vorzugsweise ist die Schenkelfeder in das Basiselement und/oder den Aussteller eingespritzt. Auf diese Weise ergibt sich ein minimaler Herstellungsaufwand, da der gesamte Windabweiser als Spritzgußteil in einem Schritt gefertigt werden kann.

Gemäß der bevorzugten Ausführungsform der Erfindung sind an dem Abweiserelement mehrere flexible Formgebungselemente angebracht. Diese können dazu dienen, das Abweiserelement im entspannten Zustand in eine bestimmte Form zu bringen, in der es platzsparend am Fahrzeugdach untergebracht ist. Die Formgebungselemente, die vorzugsweise aus Kunststoff bestehen und in das Material des Abweiserelements eingespritzt sind, können beispielsweise gekrümmt verlaufen, um den zusammengelegten Zustand vorzugeben.

Das Abweiserelement kann aus einem Gewebe oder einer luftdurchlässigen Folie bestehen, wobei der Anteil des offenen Querschnitts am Gesamtquerschnitt des Abweiserelementes dazu genutzt werden kann, die Strömungsverhältnisse bei geöffnetem Deckel des Schiebedachsystems in der gewünschten Weise einzustellen.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer perspektivischen, abgeschnittenen Ansicht einen Windabweiser im ausgestellten Zustand, der an einem Fahrzeugdach angebracht ist;
- Figur 2 den Windabweiser von Figur 1 von vorne;
- Figur 3 den Windabweiser von Figur 1 von hinten;
- Figur 4 in einer vergrößerten, geschnittenen Detailansicht den Windabweiser von Figur 1;
- Figur 5 in einer perspektivischen Rückansicht einen Windabweiser im ausgestellten Zustand, wobei er nicht am Fahrzeugdach montiert ist;

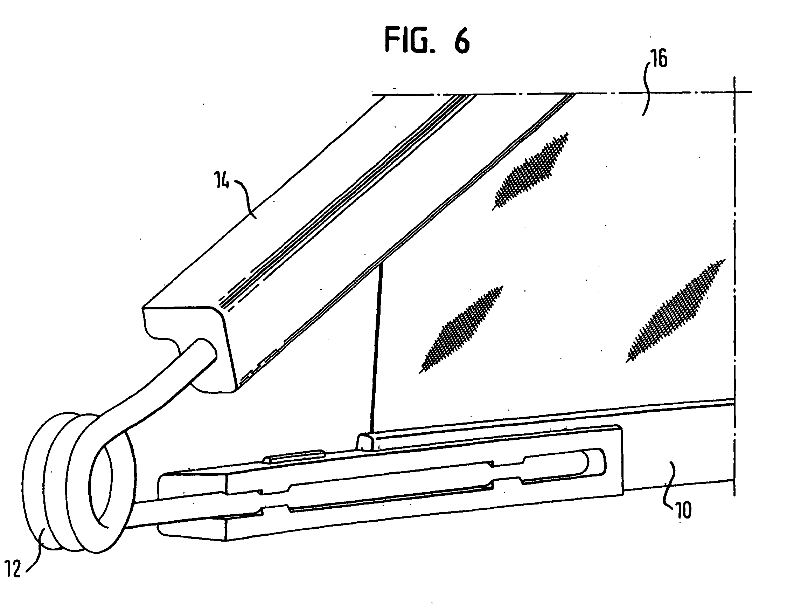

- Figur 6 in einer perspektivischen Detailansicht das Gelenk des Windabweisers von Figur 5;

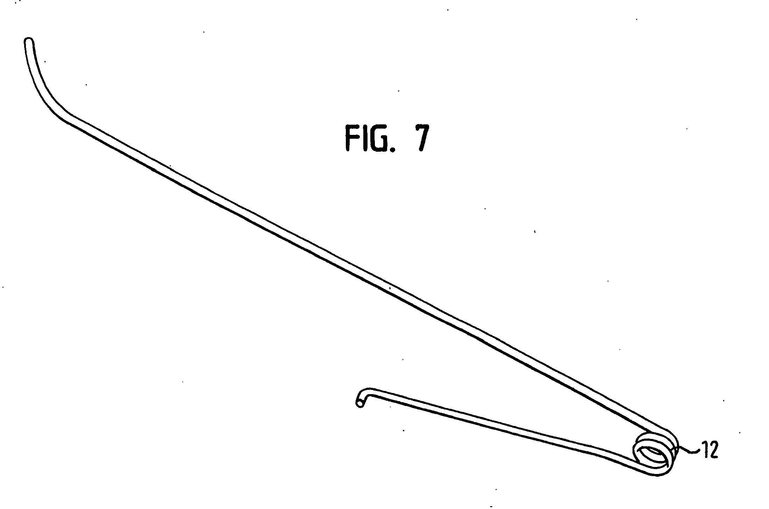

- Figur 7 in einer perspektivischen Ansicht die beim Windabweiser von Figur 5 verwendete Schenkelfeder;
- Figur 8 in einer perspektivischen Ansicht den am Fahrzeugdach montierten Windabweiser, wobei sich der Windabweiser in der eingefahrenen Stellung befindet und zur besseren Übersichtlichkeit das Abweiserelement nicht gezeigt ist; und
- Figur 9 den Windabweiser von Figur 8 in einer anderen perspektivischen Ansicht.

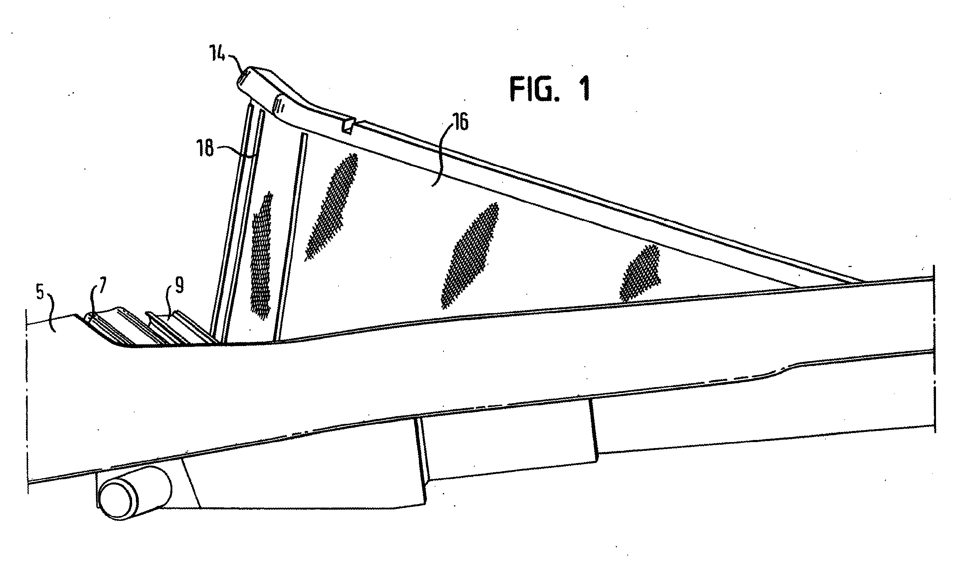

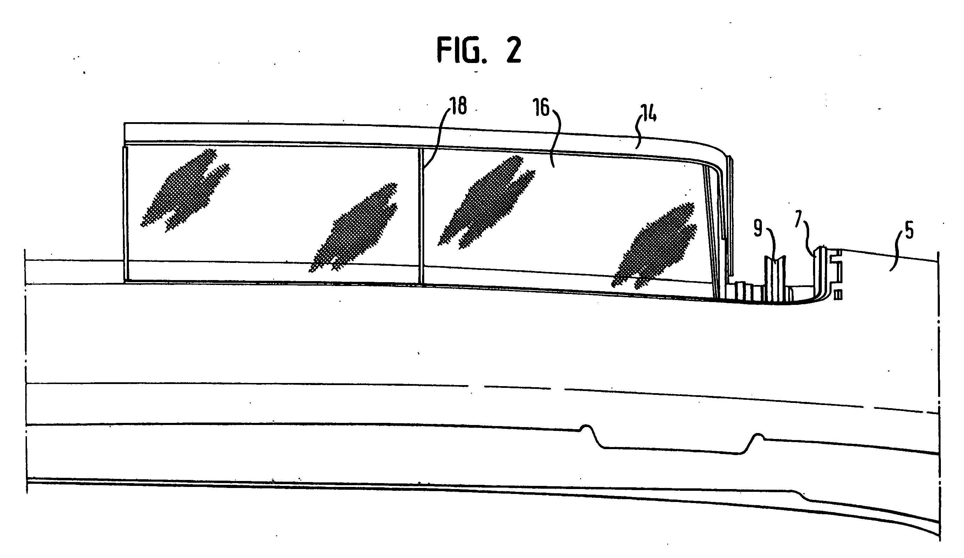

In den Figuren 1 und 2 ist schematisch ein Teil eines Fahrzeugdachs 5 gezeigt, in dem eine Dachöffnung 7 ausgebildet ist. Die Dachöffnung kann von einem (nicht dargestellten) Deckel eines Schiebedachsystems verschlossen werden. Entlang dem Rand der Dachöffnung 7 erstreckt sich ein Montagerahmen 9, an dem die üblichen Funktionsteile des Schiebedachsystems angebracht werden können.

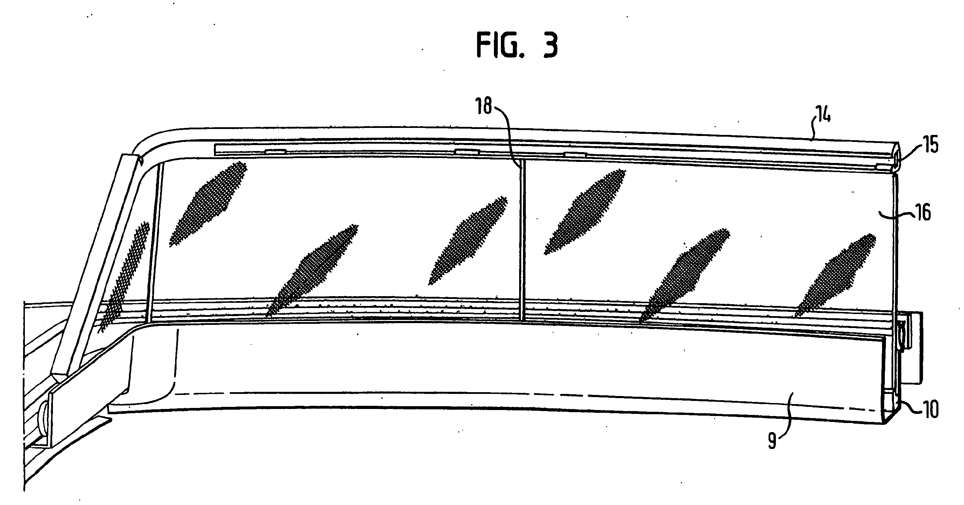

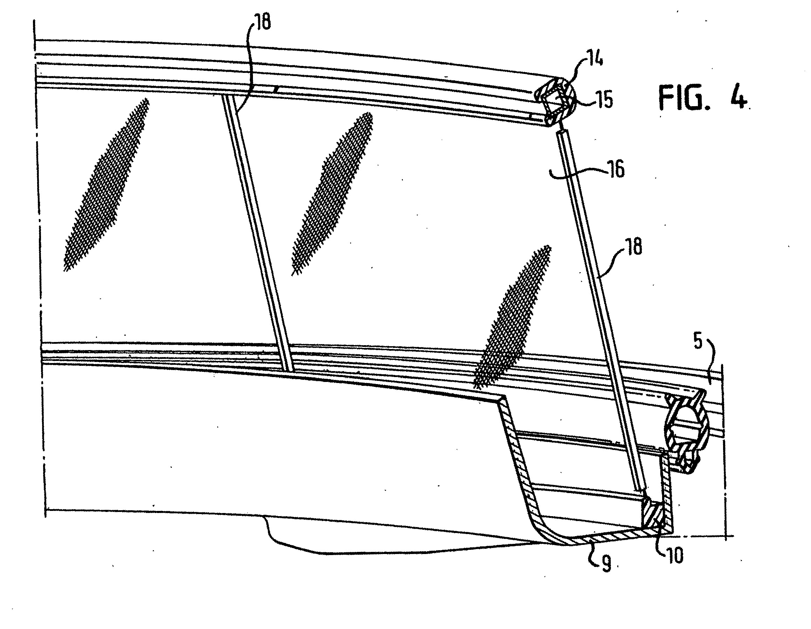

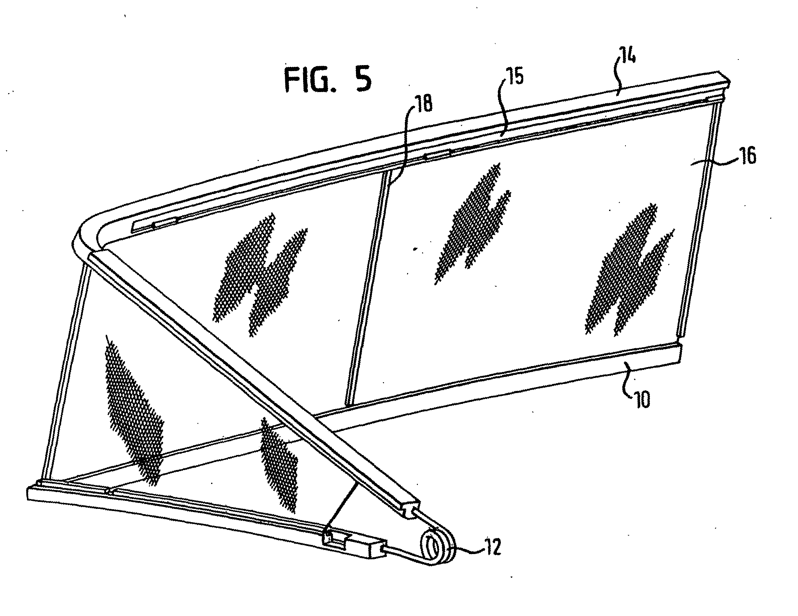

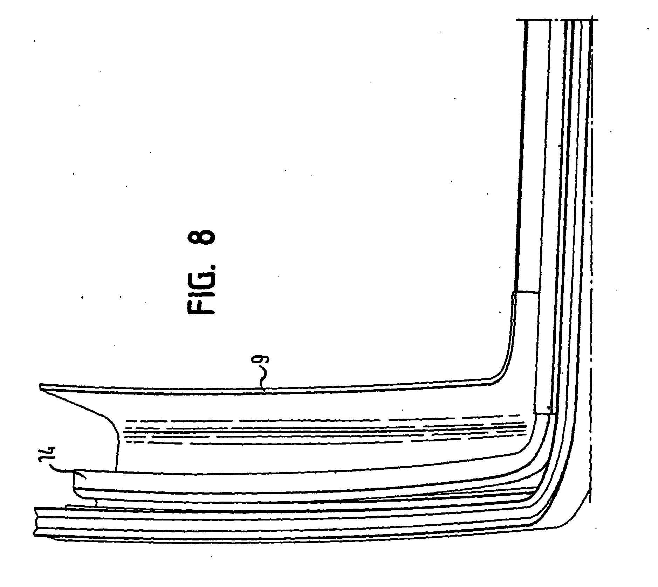

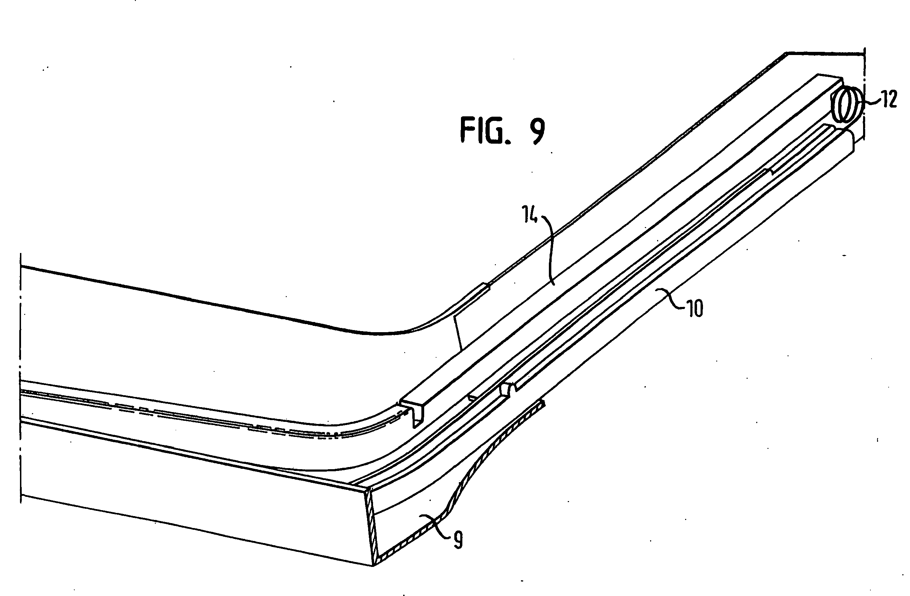

Am Montagerahmen 9 ist auch ein Basiselement 10 (siehe insbesondere die Figuren 3 bis 5) angebracht, das Teil eines Windabweisers ist. Das Basiselement 10 besteht aus Kunststoff und hat eine U-förmige Gestalt. Das Mittelteil des U-förmigen Basiselements erstreckt sich entlang dem vorderen Rand der Dachöffnung 7, und die beiden Schenkel erstrecken sich jeweils entlang dem vorderen Abschnitt der beiden Seitenränder. An jedem der Schenkel des Basiselementes 10 ist eine Schenkelfeder 12 mit einem ihrer Schenkel angebracht. An dem anderen Schenkel ist ein Schenkel eines U-förmigen Ausstellers 14 angebracht. Der Aussteller 14 besteht ebenfalls aus Kunststoff, hat etwa denselben Verlauf wie das Basiselement 10 und ist mit einem Verstärkungselement 15 versehen, das aus Metall besteht. Die Schenkelfeder 12 dient als Scharnier zwischen dem Basiselement 10 und dem Aussteller 14 und beaufschlagt diesen in eine ausgestellte Position, in der sich der Aussteller 14 oberhalb der Außenfläche des Fahrzeugdaches 5 befindet. Diese Position ist beispielsweise in den Figuren 1 bis 4 gezeigt. Wenn auf den Aussteller 14 entgegen der Kraft der Schenkelfeder 14 eingewirkt wird, kann der Aussteller in eine eingefahrene Stellung verstellt werden, die in den Figuren 8 und 9 gezeigt ist. In dieser Stellung ist der Aussteller unterhalb der Außenfläche des Fahrzeugdaches 5 im Montagerahmen 9 aufgenommen. Der Aussteller 14 kann aus der ausgestellten Stellung in die eingefahrene Stellung beispielsweise dadurch überführt werden, daß der Deckel des Schiebedachsystems oder eines seiner Führungsteile beim Schließen des Deckels auf die schräg nach oben laufenden Schenkel des Ausstellers 14 aufläuft und diese nach unten drückt.

Zwischen dem Basiselement 10 und dem Aussteller 14 ist ein Abweiserelement 16 vorgesehen, das aus einem flexiblen und luftdurchlässigen Material besteht, beispielsweise einem Gewebe oder einer luftdurchlässigen Folie aus Kunststoff. Das Abweiserelement 16 ist in das Basiselement 10 und den Aussteller 14 eingespritzt. Wenn sich der Aussteller 14 in seiner ausgestellten Position befindet, ist das Abweiserelement 16 straff zwischen dem Basiselement 10 und dem Aussteller 14 gespannt.

Auf das Abweiserelement 16 sind Formgebungselemente 18 aufgespritzt, die aus einem flexiblen Kunststoffmaterial bestehen und so vorgekrümmt oder vorgespannt sind, daß sie das Abweiserelement 16 in einer gewünschten Form halten oder das Zusammenlegen in diese Form unterstützen, wenn das Abweiserelement 16 nicht zwischen dem Aussteller 14 und dem Basiselement 10 gespannt ist. Auf diese Weise läßt sich eine reproduzierbare, platzsparende Form des Abweiserelementes 16 erzielen, wenn sich der Aussteller 14 in der eingefahrenen Stellung befindet.

### Bezugszeichenliste

5: Fahrzeugdach
7: Dachöffnung
9: Montagerahmen
10: Basiselement
12: Schenkelfeder
14: Aussteller
15: Verstärkungselement
16: Abweiserelement
18: Formgebungselement

## Patentansprüche

1. Windabweiser für ein Fahrzeugdach, mit einem Basiselement (10), das dafür vorgesehen ist, an dem Fahrzeugdach (5) angebracht zu werden, einem Aussteller (14), der mit dem Basiselement (10) schwenkbar verbunden ist, einem luftdurchlässigen und flexiblen Abweiserelement (16), das an dem Basiselement (10) und an dem Aussteller (14) angebracht ist, **dadurch gekennzeichnet, dass** der Windabweiser weiter mindestens eine Ausstellerfeder (12) umfasst, die den Aussteller (14) in eine ausgestellte Stellung beaufschlagt, in der das Abweiserelement (16) zwischen dem Basiselement (10) und dem Aussteller (14) gespannt ist, wobei die Ausstellerfeder eine Schenkelfeder (12) aus Draht ist, die als Gelenk zwischen dem Aussteller (14) und dem Basiselement (10) dient.

2. Windabweiser nach Anspruch 1, **dadurch gekennzeichnet, daß** das Basiselement (10) und der Aussteller (14) jeweils U-förmig ausgebildet sind und jeweils eine Schenkelfeder einen Schenkel des Ausstellers (14) mit einem Schenkel des Basiselements (10) verbindet.

3. Windabweiser nach Anspruch 2, **dadurch gekennzeichnet, daß** die Schenkelfeder in das Basiselement und den Aussteller eingespritzt ist.

4. Windabweiser für ein Fahrzeugdach, mit einem Basiselement (10), das dafür vorgesehen ist, an dem Fahrzeugdach (5) angebracht zu werden, einem Aussteller (14), der mit dem Basiselement (10) schwenkbar verbunden ist, einem luftdurchlässigen und flexiblen Abweiserelement (16), das an dem Basiselement (10) und an dem Aussteller (14) angebracht ist, **dadurch gekennzeichnet, dass** der Windabweiser weiter mindestens eine Ausstellerfeder (12) umfasst, die den Aussteller (14) in eine ausgestellte Stellung beaufschlagt, in der das Abweiserelement (16) zwischen dem Basiselement (10) und dem Aussteller (14) gespannt ist, wobei als Ausstellerfeder eine Blattfeder verwendet wird, die im Aussteller und im Basiselement angebracht ist und als Gelenk wirkt.

5. Windabweiser nach einem der vorhergehenden Ansprüche, **dadurch gekennzeichnet, daß** an dem Abweiserelement (16) mehrere flexible Formgebungselemente (18) angebracht sind.

6. Windabweiser nach Anspruch 5, **dadurch gekennzeichnet, daß** die Formgebungselemente (18) gekrümmt verlaufen.

7. Windabweiser nach einem der Ansprüche 5 und 6, **dadurch gekennzeichnet, daß** die Formgebungselemente (18) in das Material des Abweiserelements (16) eingespritzt sind.

8. Windabweiser nach einem der vorhergehenden Ansprüche, **dadurch gekennzeichnet, daß** das Abweiserelement (16) in das Basiselement (10) und/oder den Aussteller (14) eingespritzt ist.

9. Windabweiser nach einem der vorhergehenden Ansprüche, **dadurch gekennzeichnet, daß** im Basiselement (10) und/oder im Aussteller (14) ein Verstärkungselement (15) angeordnet ist.

10. Windabweiser nach einem der vorhergehenden Ansprüche, **dadurch gekennzeichnet, daß** das Abweiserelement (16) aus einem Gewebe oder einer luftdurchlässigen Folie besteht.

## Claims

1. Wind deflector for a vehicle roof, with a base element (10) which is provided for attachment to the vehicle roof (5), a deployment element (14) which is connected pivotably to the base element (10), an air-permeable and flexible deflector element (16) which is attached to the base element (10) and to the deployment element (14), **characterized in that** the wind deflector furthermore comprises at least one deployment element spring (12) which urges the deployment element (14) into a deployed position in which the deflector element (16) is tensioned between the base element (10) and the deployment element (14), with the deployment element spring being a wire leg spring (12) which serves as a joint between the deployment element (14) and the base element (10).

2. Wind deflector according to Claim 1, **characterized in that** the base element (10) and the deployment element (14) are each of U-shaped design, and each leg spring connects a leg of the deployment element (14) to a leg of the base element (10).

3. Wind deflector according to Claim 2, **characterized in that** the leg spring is injected into the base element and the deployment element.

4. Wind deflector for a vehicle roof, with a base element (10) which is provided for attachment to the vehicle roof (5), a deployment element (14) which is connected pivotably to the base element (10), and a permeable and flexible deflector element (16) which is attached to the base element (10) and to the deployment element (14), **characterized in that** the wind deflector furthermore comprises at least one deployment element spring (12) which urges the deployment element (14) into a deployed position in which the deflector element (16) is tensioned between the base element (10) and the deployment element (14), wherein, as the deployment element spring, use is made of a leaf spring which is attached in the deployment element and in the base element and acts as a joint.

5. Wind deflector according to one of the preceding claims, **characterized in that** a plurality of flexible shaping elements (18) are attached to the deployment element (16).

6. Wind deflector according to Claim 5, **characterized in that** the shaping elements (18) have a curved profile.

7. Wind deflector according to either of Claims 5 and 6, **characterized in that** the shaping elements (18) are injected into the material of the deflector element (16).

8. Wind deflector according to one of the preceding claims, **characterized in that** the deflector element (16) is injected into the base element (10) and/or the deployment element (14).

9. Wind deflector according to one of the preceding claims, **characterized in that** a reinforcing element (15) is arranged in the base element (10) and/or in the deployment element (14).

10. Wind deflector according to one of the preceding claims, **characterized in that** the deflector element (16) is composed of a woven fabric or an air-permeable film.

## Revendications

1. Déflecteur de vent pour toit de véhicule, comprenant un élément de base (10), qui est prévu pour être monté sur le toit du véhicule (5), un régleur (14) qui est connecté de manière pivotante à l'élément de base (10), un élément déflecteur (16) perméable à l'air et flexible, qui est monté sur l'élément de base (10) et sur le régleur (14), **caractérisé en ce que** le déflecteur de vent comprend en outre au moins un ressort de régleur (12), qui sollicite le régleur (14) dans une position exposée, dans laquelle l'élément déflecteur (16) est serré entre l'élément de base (10) et le régleur (14), le ressort de régleur étant un ressort à branches (12) en fil métallique, qui sert d'articulation entre le régleur (14) et l'élément de base (10).

2. Déflecteur de vent selon la revendication 1, **caractérisé en ce que** l'élément de base (10) et le régleur (14) sont réalisés à chaque fois en forme de U et à chaque fois un ressort à branches relie une branche du régleur (14) à une branche de l'élément de base (10).

3. Déflecteur de vent selon la revendication 2, **caractérisé en ce que** le ressort à branches est injecté dans l'élément de base et le régleur.

4. Déflecteur de vent pour un toit de véhicule, comprenant un élément de base (10) qui est prévu pour être monté sur un toit de véhicule (5), un régleur (14), qui est connecté de manière pivotante à l'élément de base (10), un élément déflecteur (16) perméable à l'air et flexible, qui est monté sur l'élément de base (10) et sur le régleur (14), **caractérisé en ce que** le déflecteur de vent comprend en outre au moins un ressort de régleur (12), qui sollicite le régleur (14) dans une position exposée, dans laquelle l'élément déflecteur (16) est serré entre l'élément de base (10) et le régleur (14), un ressort à lame étant utilisé en tant que ressort de régleur, et étant monté dans le régleur et dans l'élément de base et agissant en tant qu'articulation.

5. Déflecteur selon l'une quelconque des revendications précédentes, **caractérisé en ce que** plusieurs éléments de façonnage (18) flexibles sont montés sur l'élément déflecteur (16).

6. Déflecteur selon la revendication 5, **caractérisé en ce que** les éléments de façonnage (18) sont courbés.

7. Déflecteur selon l'une quelconque des revendications 5 et 6, **caractérisé en ce que** les éléments de façonnage (18) sont injectés dans le matériau de l'élément déflecteur (16).

8. Déflecteur selon l'une quelconque des revendications précédentes, **caractérisé en ce que** l'élément déflecteur (16) est injecté dans l'élément de base (10) et/ou le régleur (14).

9. Déflecteur selon l'une quelconque des revendications précédentes, **caractérisé en ce qu'**un élément de renforcement (15) est disposé dans l'élément de base (10) et/ou dans le régleur (14).

10. Déflecteur selon l'une quelconque des revendications précédentes, **caractérisé en ce que** l'élément déflecteur (16) se compose d'un tissu ou d'une feuille perméable à l'air.
